# EUROPEAN PATENT SPECIFICATION

(11) **EP 2 222 793 B1**
(45) Date of publication and mention of the grant of the patent: **11.10.2017**
(21) Application number: 08852905.2
(22) Date of filing: 19.11.2008
(51) Int. Cl.: C09C 1/30, C09C 3/08, C09D 5/08, C09J 11/00

(54) **ANTI-CORROSIVE PARTICLES**
KORROSIONSSCHUTZPARTIKEL
PARTICULES ANTICORROSION

(30) Priority: 19.11.2007 US 3623 P
(43) Date of publication of application: 01.09.2010
(73) Proprietor: Grace GmbH & Co. KG, 67545 Worms (DE)
(72) Inventor: FLETCHER, Timothy, E., 67549 Worms (DE)
(74) Representative: Uexküll & Stolberg
(86) International application number: PCT/EP2008/009777
(87) International publication number: WO 2009/065569

(56) References cited:
- EP-A- 0 412 686
- EP-A- 0 760 387
- WO-A1-00/20221
- DE-A1- 10 238 463
- US-A1- 2005 065 269

## Description

### FIELD OF THE INVENTION

The present invention relates to dispersions of particles including anti-corrosive particles. The present invention is also related to methods of making such dispersions and coatings made therefrom.

### BACKGROUND OF THE INVENTION

It is known that certain cations and anions, have corrosion inhibiting properties and that compounds containing them can be included in protective films and coatings that are intended to provide adhesion and corrosion inhibiting properties to metallic surfaces and structures. Typical examples include cations of calcium, magnesium, strontium, barium, manganese, zinc, cerium and other rare earth elements as well as anions such as silicate, borate, molybdate, nitrophthalate, phosphate, hydrogen phosphate, phosphite, phosphonates and phosphonocarboxylates. Classic inhibitors based on lead compounds and cations and compounds of some other heavy metals such as chromium e.g. chromate and zinc are however of less interest these days for environmental and health and safety reasons.

The inhibitive compounds may be in the form of sparingly water-soluble salts and can for example be prepared by a process of particle growth and precipitation in the presence of the required cations and anions under suitable conditions. The inhibitive compounds may also be in the form of particles of inorganic oxides such as silica, silicates, alumina and aluminosilicates comprising additional inhibitive cations and anions. These inhibitive compounds can for example be prepared by a process of precipitation or gelation of the oxide in the presence of the required cations and anions under suitable conditions.

Inhibitive compounds based on inorganic oxides can alternatively be made through a process of ion-exchange, in which surface protons and hydroxyl groups of the pre-formed oxide are replaced by contacting the oxide with a solution containing the required inhibitive cations and anions, again under suitable conditions. In either case, the inorganic oxides involved are often characterized by having certain surface areas and porosities with corrosion inhibiting ions attached to the internal and external surface of the particles, producing surface modified inorganic particles, although ions may be found through the bulk of the particles as well, depending on the method of preparation.

Of course, from the above description, combinations of inhibitive compounds based on sparingly soluble salts and those based on inorganic oxides may be prepared simultaneously in various ways according to the composition of the solution or slurry from which the inhibitive compounds are to be prepared and the processing route, allowing for a great variety in properties displayed by the resulting inhibitive compound.

In many cases, the films and coatings employed in anti-corrosion have a certain permeability to water and it is believed that the mechanism of corrosion inhibition involves gradual dissolution of the compounds in water, releasing ions as the active inhibitors. For such systems to be effective over a long period, the solubility of the compound is particularly important. If the compound is too soluble, blistering of the coating may occur and the compound will be rapidly depleted; if it is insufficiently soluble the compound will be ineffective. Whether the inhibitive compound is a sparingly soluble salt, or based on an inorganic oxide or is some combination of the two, the typical solubility of such compounds suitable for use in films and coatings results in inhibitive ion concentrations in aqueous media of around 10⁻⁵M to 10⁻²M.

For inhibitive compounds based on inorganic oxides, the inorganic oxide may itself have a certain solubility with respect to the provision of inhibitive substances, according to the nature of the environment in which the corrosion inhibiting particles are used e.g. in the case of silica, silicic acid has a background solubility of 10⁻³M with the concentration of silicate being pH dependent and having a value of 10⁻²M for example at a pH of 10.5. It is however sometimes believed that these types of corrosion inhibiting particles can act to release inhibitive cations and anions into solution by ion exchange with aggressive ions existing in that environment as an additional or alternative mechanism of action to one based on dissolution. The rate of release of the corrosion inhibiting ions would then be influenced by the permeability of the film or coating to the exchanging ions in addition to or rather than dissolution of inhibitive ions into the permeating aqueous environment. Corrosion inhibiting ions would in that case be released to a greater extent from the inorganic oxide in those areas where the desired barrier properties of the coating were weakest, leading thereby to improved performance properties.

The inhibitive compounds referred to above are usually made available in the form of dry powders, making use of washing, drying and milling operations as required as additional processing steps and average particle sizes of the powders usually exceed 1 to 2 µm (microns) making them most suitable for films and coatings that exceed a few µm (microns) in thickness. For suitability of incorporation into a wide variety of film and coating systems as well as suitability with respect to corrosion resistance, besides the criteria of solubility, the pH of an aqueous slurry of such inhibitive compounds will in most cases typically fall within the range of 4 to 10.5 although lower or higher values can be suitable depending on the actual chemistry of the coating or film in question and the nature of the metallic substrate. For example, many surface pre-treatments can be quite acidic and display a pH in the range of 1 to 4.

Making anti-corrosive particles available in dispersion form would render the operation of incorporating the particles into the coating more convenient and would avoid generation of dust. However, like the dry powder, known anti-corrosive particle dispersions contain pigment particles that are relatively large in size and greater than 1 to 2 µm (microns). Such dispersions are not suitable for use in filming and coating applications that require small particle sizes, such as chromium-free surface treatments or thin film primers where the film thickness may be less than a few µm (microns) going down to the sub-micrometer (sub-micron) region. It is additionally believed that both the particle size and state of dispersion of the inhibitive pigment may influence the availability and mobility of inhibitive ions derived from the inhibitive compound within the film or coating under environmental exposure. Small particle pigments may therefore provide potential benefits in anti-corrosive treatment films and coatings regardless of the thickness of the film applied.

The general principles covering the operations of milling, dispersion and dispersions of particles such as inorganic and organic coloring pigments or fillers in liquids and surface coatings, as well as the properties of such suspensions are of course well known. For example, a comprehensive review including the role of surface active, wetting and dispersion agents as a means of producing and stabilizing pigment dispersions is given in "Dispersion of Powders in Liquids with Special Reference to Pigments" 3rd Edition, Edited by G.D.Parfitt, Applied Science Publishers, 1981. Further details on the fundamentals and preparation of the colloidal state can be found in "Foundations of Colloid Science" by R.J.Hunter, Vol 1-2, Academic Press, 1986.

Needless to say, a number of patents discuss specific aspects of the dispersion of particles and pigments and the properties of particulate and pigment suspensions with respect to surface active, wetting and dispersion agents and other additives designed to control some feature of the dispersion. US 4,186,028 for example concerns the use of phosphonocarboxylic acids as dispersants to lower the viscosity and reduce settling of highly concentrated aqueous suspensions of pigments and fillers such as titanium dioxide, iron oxides, zinc oxides, chromium oxides, talcs, calcium carbonate, barium sulphate and quartz at a level of phosphonocarboxylic acid ranging from 0.01% to 1% based on the pigment solids. The preferred pH range of the suspensions was 6 to 10. EP 0 760 387 A1 discloses an anti-corrosive pigment comprising a polyvalent metal organophosphonate wherein the ratio of polyvalent metal in said organophosphonate to acid groups in the corresponding organophosphonic acid is greater than 1 on an equivalent basis, This anti-corrosive pigment is prepared by a method wherein (a) an organophosphonic component selected from the group consisting of organophosphonic acid(s), monovalent salt of organophosphonic acid(s), and mixtures thereof is combined with water and at least one polyvalent metal compound to form a reaction mixture and (b) said organophosphonic component and said polyvalent metal compound react to form polyvalent metal organophosphate. US 2005/065269 A1 discloses a corrosion inhibiting mixture comprising at least one corrosion-inhibiting pigment, amorphous silica and at least one compound Mₙ(X)ₘ. The amorphous silica is typically in the form of a dry powder. EP 0 412 686 A1 discloses a corrosion inhibiting pigment which comprises particles of titanium dioxide having an outer coating of hydrous silica, hydrous alumina or a mixture of hydrous silica and hydrous alumina and having corrosion inhibiting cations chemically bonded to said coating by ion-exchange the said coating inhibiting cations being released by further ion-exchange. DE 102 38 463 A1 discloses an aqueous dispersion containing silica having a silica content of 10 to 60 wt% and contains a cation providing compound. WO 00/20221 A1 discloses a recording medium comprising a substrate having a glossy coating thereon, wherein said glossy coating comprise cationic silica particles having a mean diameter of less than 1 µm, which particles having been contacted with at least one aluminum compound.

It should be noted that many surface active, wetting and dispersion agents and other additives can display a certain compatibility or even solubility in water and as such can detract from the performance properties of coatings and film forming layers intended to provide anti-corrosive and/or adhesion promoting properties. The type and amount of such substances may therefore require careful selection.

In overview, for convenience in use, for suitability in thin films and for performance gains, there is therefore interest and a need in the industry for anti-corrosive small diameter particle dispersions that may be utilized in a variety of treatment films, primers and coatings. Ideally, these dispersions would be free of compounds of lead, chromium and some other heavy metals such as zinc. The present work is therefore concerned with the question of producing stable small particle dispersions of inhibitive compounds suitable for use in aqueous and non-aqueous protective films, surface treatments, primers, coatings, adhesives and sealants that are intended to provide adhesion and corrosion inhibiting properties to metallic surfaces and structures.

### SUMMARY OF THE INVENTION

The present invention relates to a dispersion of surface modified silica particles comprising (a) fluid, wherein said fluid comprises a complexing agent comprising acidic or basic materials, and (b) the surface modified silica particles comprising polyvalent metal ions and having an average particle diameter of 10 µm (microns) or less.

Coating compositions including these dispersions are also part of the present invention.

A still further embodiment of the present invention comprises a method of making a dispersion of surface modified silica particles including (a) mixing said surface modified silica particles with a fluid comprising a complexing agent comprising acidic or basic materials; and (b) milling said silica particles, wherein said silica particles are surface modified by polyvalent metal ions and have an average particle diameter of 10 µm (microns) or less..

### DETAILED DESCRIPTION

The present invention is concerned with corrosion inhibitors suitable for use in protective films, surface treatments, primers, coatings, adhesives and sealants that are intended to provide adhesion and corrosion inhibiting properties to metallic surfaces and structures. As described herein, all of these fields of application are encompassed by the single term "coating".

According to the present invention, a corrosion inhibitor comprises particles of a silica having corrosion inhibiting ions chemically bound to the particles.

It must be noted that as used herein and in the appended claims, the singular forms "a", "and", and "the" include plural referents unless the context clearly dictates otherwise. Thus, for example, reference to "an oxide" includes a plurality of such oxides and reference to "oxide" includes reference to one or more oxides and equivalents thereof known to those skilled in the art, and so forth.

Inhibitive compounds based on silicas may, for example, be prepared by a process of precipitation or gelation of the oxide in the presence of the required cations and anions under suitable conditions. Inhibitive compounds based on silicas can alternatively be made through a process of ion-exchange, in which surface protons and hydroxyl groups of the pre-formed oxide are replaced by contacting the oxide with a solution containing the required inhibitive cations and anions, again under suitable conditions. In either case, the silicas involved are often characterized by having certain surface areas and porosities with corrosion inhibiting ions attached to the internal and/or external surface of the particles, producing surface modified silica particles, although ions may be found through the bulk of the particles as well, depending on the method of preparation.

According to the present invention, a corrosion inhibitor may also comprise combinations of inhibitive cations and anions in the form of sparingly soluble metal salts of the anion. Inhibitive compounds in the form of sparingly water-soluble salts can for example be prepared by a process of particle growth and precipitation from slurries or solutions in the presence of the required cations and anions under suitable conditions.

Combinations of inhibitive compounds based on sparingly soluble salts and those based on silicas may be prepared by mixing the pre-formed substances, mixing pre-formed silicas or alternatively pre-formed silicas bearing inhibitive cations and anions with the appropriate inhibitive cations and anions as necessary such that particle growth and precipitation of sparingly soluble salts occurs in the presence of the silica, where in all three cases, the silica would exist in the presence of polyvalent cations.

Combinations may also be made in which sparingly soluble inhibitive salts are combined with precursors to silicas like sodium silicate, alkyl silicates such as tetraethyl orthosilicate, and so forth in the case of silica, such that precipitation or gelation, or simply formation, of the silica occurs, intimately associated with inhibitive cations and anions. Similarly, mixtures of inhibitive cations and anions and precursors to silicas can be prepared such that particle growth, precipitation and/or gelation of sparingly soluble compounds and oxides occur simultaneously, intimately associated with one another.

Clearly, a number of ways to prepare inhibitive combinations exist according to the composition of the solution or slurry from which the inhibitive compounds are to be prepared and the processing route, allowing for a great variety in properties displayed by the resulting inhibitive compound.

Preferred cations are those of calcium (Ca²⁺), magnesium (Mg²⁺), zinc (Zn²⁺), manganese (Mn²⁺), and cations of the rare earth elements such as cerium (Ce³⁺/Ce⁴⁺) cations, but other suitable cations may be cobalt (Co²⁺), lead (Pb²⁺), strontium (Sr²⁺), barium (Ba²⁺) and aluminium (Al³⁺). Preferred anions are those derived from silicate, borate, molybdate, hydrogen phosphate, phosphate, phosphite, nitrophthalates, phosphonate and phosphonocarboxylates as well as azoles and their derivatives such as 1,2,3-benzotriazole, tolytriazole, benzothiazole, 2-mercaptobenzothiazole, benzimidazole, 2-mercaptobenzimidazole and 2-mercaptobenzoxazole but other suitable anions may be permanganate, manganate, vanadate and tungstate. With respect to the aforementioned components providing anions, it is to be understood that the free acid form or any other partially neutralized or fully neutralized form, i.e., the conjugate species may be employed in any particular case as appropriate.

By way of example, the process of cation exchange with silicas can be considered. Particles of silicas may be prepared such that a proportion of hydroxyl groups are presenton the surface of the particles. The particles may differ in porosity from non-porous to highly porous, and may be in any shape from spherical to any non-spherical shape, and may be in the form of a gel, a precipitate, a sol (colloidal), fumed or other common form readily recognized in the art. Such oxide particles may be prepared according to the processes set forth in or referenced by U.S. Patents Nos. 5,336,794, 5,231,201, 4,939,115, 4,734,226, and 4,629,588 as well as DE 1,000,793, GB 1,263,945, DE 1,767332, US 5,123,964, US 5,827,363, US 5,968,470, US 2004/0249049 and 2005/0228106. Details regarding methods of making these particles may also be found in textbooks such as "The Chemistry of Silica" by R. K.Iler, John Wiley & Sons, 1979 and "Sol-Gel Science" by C.J. Brinker and G.W. Scherer, Academic Press, 1990. These kinds of particles are also commercially available, such as, for example, from W. R. Grace & Co.-Conn. under the trade names SYLOID®, PERKASIL® or LUDOX®.

The protons of the hydroxyl groups may be replaced by contacting the oxide with a solution containing the required cations. To carry out exchange the oxide may be stirred in water at room temperature and the pH monitored by a meter. Then the substance to be exchanged (e.g. calcium hydroxide or basic zinc carbonate) is added slowly whilst not allowing the pH to rise too far (e.g., above 10.5 for silica). The pH needs to be high enough to remove protons but not so high as to dissolve the silica. The uptake can be followed by observing the fall of pH over a period of time following the addition of the base. When the pH no longer falls then exchange is complete and the oxide particles may be milled, if necessary, washed and dried under vacuum. Uptake of cations in the oxide can be measured by XRF spectroscopy. Processes for making such exchanged oxides may be found in or referenced by U.S. Patents Nos. 4,687,595, 4,643,769, 4,419,137 and 5,041,241. Typically, the silica inhibitor particles will have BET surface areas ranging from 5m²/g up to 750 m²/g. with average porosities varying from 0.1 ml/g to 3ml/g.

As noted earlier, similar compounds based on silicas can for example be prepared by a process of precipitation or gelation of the oxide in the presence of the required cations and anions under suitable conditions and processes for making such compounds may be found for example in U.S. Patent No. 4,849,297 and GB Patent No. 918,802. Similarly, examples of inhibitive compounds based on sparingly soluble salts and processes for preparing them can for example be found in U.S. Patents Nos. 4,247,526, 4,139,599, 4,294,621, 4,294,808, 4,337,092, 5,024,825, 5,108,728, 5,126,074, 5,665,149, and 6,083,308, U.S. Patent Application No. 2007/0012220 as well as GB Patents Nos. 825,976, 914,707, 915,512, 1,089,245, DE Patents Nos. 2,849,712, 2,840,820, and 1,567,609 and EP Patent No. 522,678.

In many cases, the films and coatings employed in anti-corrosion have a limited permeability to water and the mechanism of corrosion inhibition is believed to involve gradual dissolution of the compounds in water with release of ions as the active inhibitors. For such systems to be effective over a long period, the solubility of the compound is very important. If the compound is too soluble, blistering of the coating may occur and the compound will be rapidly depleted; if it is insufficiently soluble the compound will be ineffective. Whether the inhibitive compound is purely a sparingly soluble salt, or based on an inorganic oxide or is some combination of the two, the typical water solubility of such compounds suitable for use in films and coatings results in inhibitive ion concentrations in aqueous media of around 10⁻⁵M to 10⁻²M.

For inhibitive compounds based on silicas, the silica may itself have a certain solubility with respect to the provision of inhibitive substances, according to the nature of the environment in which the corrosion inhibiting particles are used e.g. in the case of silica, silicic acid has a background
solubility of 10⁻³M with the concentration of silicate being pH dependent having a value of 10⁻²M for example at a pH of 10.5.

It is sometimes believed that inhibitors based on silicas can act to release inhibitive cations and anions into solution by ion exchange with aggressive ions existing in the environment in which the inhibitive particles are used. It would then be permeability of the film or coating to the exchanging ions that would influence the rate of release of the corrosion inhibiting ions in addition to or rather than the mechanism involving solubilisation of inhibitive ions into the permeating aqueous environment. Corrosion inhibiting ions would in that case be preferentially released from the silica in those areas where the desired barrier properties of the coating were weakest, leading thereby to improved performance properties.

For reasons related to the ability to incorporate corrosion inhibitors into a wide variety of film and coating systems as well as suitability with respect to corrosion resistance, in addition to the criteria of solubility, the pH of an aqueous slurry of inhibitive compounds will in most cases typically fall within the range of 4 to 10.5 although lower or higher values can be suitable depending on the actual chemistry of the coating or film in question and the nature of the metallic substrate.

By way of example, in the case of simple cation exchange with silicas, and depending on the proportion of hydroxyl groups on the silica, it has been found that up to 2.5 millimoles/g of cation may be combined with the oxide whilst satisfying the criteria of solubility and pH. Since, as indicated above, the technique of ion-exchange is relatively simple the selection of preferred silicas and the treatments to give maximum uptake of corrosion inhibiting cations can be determined by simple comparative experiments. A lower limit consistent with the requirements of solubility and pH would be 0.05 millimoles/g.

The corrosion inhibiting particles may act as filler for the coating and may be included in relatively large amounts of up to 40% wt, based on the composition to be applied and up to 80% wt based on the dry film weight.

Again by reference to the case of simple cation exchange with silicas, and having regard to the quantity of cations which can be combined with the oxide as discussed previously, it will be seen that the coatings in that case may contain up to 2 millimoles/g of corrosion inhibiting cations based on the dry film weight.

Control over actual solubility's and pH values is obtained according to the broad range of compositions falling within the scope of the corrosion inhibitor chemistry reviewed above and the variety of ways by which corrosion inhibitors and combinations of corrosion inhibitors may be prepared as outlined above, where nature of the ions being combined, pore structures where silicas are involved as well as nature of the silica are important considerations.

In accordance with the present invention, it has been found that attempting to mill silica particles in the presence of polyvalent metal ions to less than a few µm (microns), or mixing small silica particles in the presence of polyvalent metal ions, results in dispersions that may be unsuitable for use in certain coating compositions.

The polyvalent cations may arise from the pre-existing association of inhibitive cations with the silica such as in the case of ion-exchanged oxides, or those produced by precipitation or co-gelation, or by addition of polyvalent cations during milling in the form of soluble or sparingly soluble compounds or they may be present according to any of the variety of ways by which combinations of inhibitive compounds can be prepared as discussed earlier.

The polyvalent metal ions may cause significant aggregation of the small silica particles or cause instability with respect to aggregation, agglomeration, high viscosities or settling when attempting to produce such small inorganic particles by milling.

The present invention alleviates this problem with the use of suitable acidic or basic agents to produce stable dispersions of small particles by controlling pH and/or by complexing the cations, thereby avoiding or minimizing excessive viscosity build-up, reagglomeration of particles and hard settling of the dispersed particles that may otherwise occur during or after milling.

Accordingly, an embodiment of the present invention includes a dispersion of surface modified silica particles having fluid or liquid, the surface modified silica particles being modified by polyvalent metal ions and have an average particle diameter of ten µm (microns) or less.

As utilized herein, the term "surface modified silica particle" relates to silica particles in the presence of polyvalent cations, where the polyvalent cations may arise from processes such as are involved in preparing corrosion inhibitors based on silicas, from the presence of soluble and sparingly soluble compounds such as those involved in preparing corrosion inhibitors based on sparingly soluble salts and/or from other types of combinations of corrosion inhibiting species and compounds as previously detailed, under conditions such that uptake of the cations by the silica can be expected.

The average particle diameter may be less than 10 µm (microns), 9 µm (microns), 8 µm (microns), 7 µm (microns), 6 µm (microns), 5 µm (microns), 4 µm (microns), 3 µm (microns), 2 µm (microns) or less than 1 µm (micron). In a more typical embodiment, the average particle diameter is less than 1 µm (micron).

The polyvalent metal ions may include calcium, zinc, cobalt, lead, strontium, barium, magnesium, manganese and cations of the rare earth elements such as cerium or mixtures thereof. In a more typical embodiment, the polyvalent metal ions include those of calcium, magnesium, manganese, zinc, and rare earth elements such as cerium.

The particles may be corrosion inhibitors based on silicas milled separately or in combination with other inorganic oxides. Other examples include silicas and corrosion inhibitors based on silicas milled in combination with partially or sparingly soluble metal salts as described earlier, such as those based on phosphates, phosphates, hydrogenphosphates, phosphonates, phosphonocarboxylates, borates, molybdates nitrophthalates, azole derivatives, permanganate, manganate, vanadate and tungstate and any suitable combination thereof. Mixtures of different particle types are also included as are combinations of inhibitive compounds based on sparingly soluble salts and those based on silicas that may be prepared simultaneously in various ways according to the composition of the solution or slurry from which the inhibitive compounds are to be prepared and the processing route as described earlier.

The present invention relates to a dispersion of surface modified inorganic particles including (a) fluid comprising a stabilizing or complexing agent, and (b) the surface modified inorganic particles comprising polyvalent metal ions. The present invention also relates to coating compositions including the above-mentioned dispersion.

In some cases, the added substance used to stabilize the dispersion and/or complex the polyvalent cations may be a soluble or partially soluble component of the corrosion inhibiting compound, particle or mixture of particles. The added substances may be discrete compounds or may be oligomeric or polymeric in nature.

The stabilizing and complexing agents may include various phosphorus and phosphorus free acidic substance as well as basic substances such as amines and alkanolamines. Of course the actual species present and state of ionization will depend on the pH and/or state of acidity or basicity at the point of use. Examples of phosphorus containing acidic substances include phosphorus acid, phosphoric acid, tri- and polyphosphoric acids, organophosphonic acids containing one phosphonic acid group per molecule such as 2-hydroxyphosphonoacetic acid, 2-phosphonobutane-1,2,4-tricarboxylic acid, phosphonated oligomers and polymers of maleic and acrylic acids as well as co-oligomers and copolymers thereof. Other examples include organophosphonic acids containing two or more phosphonic acid groups per molecule like diphosphonic acids such as alkylmethane-1-hydroxy-1,1-diphosphonic acids where the alkyl group may be substituted or unsubstituted and contain from 1 to 12 carbon atoms e.g. methyl-1-hydroxy-1,1-diphosphonic acid or propyl-1-hydroxy-1,1-diphosphonic acid. Also suitable are amino compounds containing two or more N-alkylene phosphonic acid groups per molecule such as alkylamino-di(alkylene phosphonic acids) where the alkyl group can be substituted or unsubstituted and have from 1-12 carbon atoms e.g propyl, isopropyl, butyl, hexyl, or 2-hydroxyethyl and the alkylene group may have from 1 to 5 carbon atoms as well as amino-tri(alkylene phosphonic acids) such as nitrilo-tris-(methylene phosphonic acid) and nitrilo-tris-(propylene phosphonic acid). Other suitable aminoderivatives from amino compounds are alkylene diamine-tetra-(alkylene phosphonic acids), such as ethylene diamine-tetra-(methylene phosphonic acid), dialkylene triamine-penta-(alkylene phosphonic acids such as diethylene triamine-penta-(methylene phosphonic acid) and so on.

Phosphorus free acidic substances include hydroxyacids which may be monocarboxylic acids with one or more hydroxyl groups such as glycolic acid, lactic acid, mandelic acid, 2,2-bis-(hydroxymethyl)-propionic acid, 2,2-bis-(hydroxymethyl)-butyric acid, 2,2-bis-(hydroxymethyl)-valeric acid, 2,2,2-tris-(hydroxymethyl)-acetic acid and 3,5-dihydroxybenzoic acid, dicarboxylic acids with one or more hydroxyl groups such as tartaric acid and and tricarboxylic acids with one or more hydroxyl groups such as citric acid. Phosphorus free acidic substances also include polymers of methacrylic acid, acrylic acid and maleic anhydride or maleic acid as well as copolymers thereof such as acrylate-acrylic acid copolymers, olefin-maleic anhydride copolymers like isobutylene-maleic anhydride copolymers, styrene-maleic acid copolymers and vinyl alkyl ether-maleic acid copolymers like poly(vinyl methyl ether-co-maleic acid). Phosphorus free acidic substances further include azoles and their derivatives containing two or more heteroatoms such as 1,2,3-benzotriazole, tolytriazole, benzothiazole, 2-mercaptobenzothiazole, benzimidazole, 2-mercaptobenzimidazole, benzoxazole, 2-mercaptobenzoxazole and (2-benzothiazolythio)succinic acid.

Basic substances include alkanolamines, which may be a monoalkanolamine, a dialkanolamine, a trialkanolamine, these being primarily the ethanolamines and their N-alkylated derivatives, 1-amino-2-propanols and their N-alkylated derivatives. 2-amino-1-propanols and their N-alkylated derivatives and 3-amino-1-propanols and their N-alkylated derivatives or a mixture thereof. Examples of suitable monoalkanolamines include 2-aminoethanol(ethanolamine), 2-(methylamino)-ethanol, 2-(ethylamino)-ethanol, 2-(butylamino)-ethanol, 1-methyl ethanolamine (isopropanolamine), 1-ethyl ethanolamine, 1-(m)ethyl isopropanolamine, n-butylethanolamine, cyclohexanolamine, cyclohexyl isopropanolamine, n-butylisopropanolamine, 1-(2-hydroxypropyl)-piperazine, 4-(2-hydroxyethyl)-morpholine and 2-Amino-1-propanol. Examples of suitable dialkanolamines are diethanolamine (2,2'-iminodiethanol), 3-amino-1,2-propanediol, 2-amino-1,3-propanediol, diisobutanolamine (bis-2-hydroxy-1-butyl)amine), dicyclohexanolamine and diisopropanolamine (bis-2-hydroxy-1-propylamine). An example of a suitable trialkanolamine is tris(hydroxymethyl)aminomethane.
Cyclic aliphatic amines may also be used such as morpholine; piperazine and their N-alkyl derivatives as well as fatty amines. Mixtures of any of the above phosphorus containing, phosphorus free or amine substances are also suitable. Also included are azole derivatives with amine functionality, such as 3-amino-1,2,4-triazole:

Preferred stabilizing or complexing agents include phosphorus acid, phosphoric acid, tri- and polyphosphoric acids and organophosphonic acids containing one or more phosphonic acid groups per molecule such as 2-hydroxyphosphonoacetic acid, together with monocarboxylic acids and dicarboxylic acids with one or more hydroxyl groups per molecule such as glycolic acid. Preferred stabilizing or complexing agents include azole derivatives, such as 1,2,3-benzotriazole, 2-mercaptobenzothiazole and (2-benzothiazolythio)succinic acid.

Another embodiment of the present invention relates to a method of making a dispersion of surface modified inorganic particles including mixing the surface modified silica particles and a fluid and milling the silica particles to form particles having an average diameter of ten µm (microns) or less, wherein the silica particles are surface modified with polyvalent metal ions.

In this embodiment, dispersions of small particles where the dispersions contain silica particles are obtained in the presence of polyvalent cations by wet-milling techniques, with addition of the suitable acidic, basic or complexing substances described above prior to milling whereby pH is adjusted and/or cations are complexed. The cations are present intentionally or are present as a result of prior preparation techniques. In some cases, the added substance may be a soluble or partially soluble component of the corrosion inhibiting composition that is to be milled and extra additions of the substance may not then be necessary. Stable dispersions are thereby obtained, avoiding or minimizing excessive viscosity build-up, reagglomeration of particles and hard settling that may otherwise occur during or after wet milling.

The average particle sizes produced are 10 µm (microns) or less and all or most of the particles in the dispersion may be less than 1 µm (micron). The particles may be non-porous, substantially non-porous or porous according to the nature of the silica used in the process or prepared during the overall process of preparing the inhibitor. In the light of the previous discussion, porosities may therefore vary up to 3ml/g. Milling may commonly be carried out in an aqueous phase but may also be carried out in a non-aqueous phase. For the non-aqueous embodiments, suitable solvents may be any of the known solvents commonly used in coatings applications such as alcohols, esters, ketones, glycol ethers, aromatic and, aliphatic hydrocarbons, as well as aprotic solvents such as N-Methyl pyrrolidone, N-Ethyl pyrrolidone, Dimethyl sulphoxide, N,N-Dimethylformamide and N,N-Dimethylacetamide. For the case where the particles already exist as suitably small particles but in an aqueous phase either as a consequence of particle formation and growth in that phase, a situation encompassed by the embodiments described earlier, or as a result of milling larger particles, in the aqueous phase, the silicas may be transferred to any of the solvent classes mentioned above by techniques known in the prior art. Examples are those discussed in the Journal of Colloidal & Interface Science 197, 360-369, 1998 A. Kasseh & E. Keh, "Transfers of Colloidal Silica from water into organic solvents of intermediate polarities" and the Journal of Colloidal & Interface Science 208, 162-166, 1998 A. Kasseh & E. Keh, "Surfactant mediated transfer of Colloidal Silica from water into an immiscible weakly polar solvent" or recited in US Patent Nos. 2,657,149, 2,692,863, 2,974,105, 5,651,921, 6,025,455, 6,051,672, 6,376,559 and GB Patent No. 988,330. Introduction of polyvalent cations, stabilizing and complexing components and/or combination with sparingly soluble salts may occur prior to solvent transfer or following solvent transfer.

The corrosion inhibiting particles may be included in protective and adhesion promoting coatings and layers, such as surface pretreatments, surface films, anti-corrosive primers, adhesives and sealants and the present invention includes protective coatings and adhesion promoting coatings and layers containing corrosion inhibiting particles as described above. The protective coatings and adhesion promoting coatings and layers may be based on any of the known types of organic and inorganic chemistries used in anti-corrosion e.g. epoxy resins, polyesters resins, phenolic resins, amino resins such as melamine-formaldehyde, urea-fomaldehyde or benzoguanamine resins, vinyl resins, alkyd resins, chlorinated rubbers or cyclised rubbers, acrylic and styrene-acrylic chemistries, styrene.butadiene resins, epoxy-esters, silicate based coatings such as zinc-rich silicates, sol-gel coatings based on alkyl silicates and/or colloidal silicas, films, treatments and coatings derived from organofunctional silanes, as well as acidic or alkaline metal pretreatment solutions and primer-pretreatment solutions.

### EXAMPLES

The following Examples are given as specific illustrations of the claimed invention. It should be understood, however, that the invention is not limited to the specific details set forth in the Examples.

### EXAMPLE 1

A 10L Drais Laboratory Pearl mill (available from Draiswerke, Inc,) is filled with 1.2 Kg of ZrO₂ beads (0.6-1mm in diameter). An aqueous slurry of Shieldex^{®} C303 pigment (available from W. R. Grace & Co.), having an average particle size of 3-4 µm, to which is added a small amount of 2-hydroxyphosphonoacetic acid is circulated for 6 hours at a rotor speed of 2800rpm (slow setting) and at a pump speed of 40% of the maximum. Subsequently, 0.2% by weight of Acticide^{®} LA 1206 bacteriacide (available from Thor Chemicals) is mixed in. The suspension of Shieldex^{®} C303 pigment and water is stirred for 1 hour at room temperature before addition under mixing of the solution of 2-hydroxyphosphonoacetic acid. This causes the pH to drop from 8.42 to 8.04. The composition of the slurry in % by weight is Shieldex^{®} C303 pigment 15.21%; water 72.93%; 10.66% of a 5% aqueous solution of 2-hydroxyphosphonoacetic acid and 0.2% Acticide^{®} LA 1206 bacteriacide.

Following milling, a free flowing dispersion of Ca/SiO2 particles results, having an average particle size of 0.3 um which remains stable on storage for more than 90 days. 98% of the particles are less than 1 jum. Particle size is determined with a Mastersizer^{®} 2000 light scattering equipment available from Malvern Instruments.

### EXAMPLE 2

### (Comparative)

The above example is repeated except that 2-hydroxyphosphonoacetic acid is not added to the mixture. This led to a fairly viscous dispersion in which the particles reagglomerated on milling, with a reagglomeration peak appearing at an average size of 10 µm.

### EXAMPLE 3

### (Comparative)

2-hydroxyphosphonoacetic acid is again not added and different milling conditions are adopted. A 2L vertical laboratory pearl mill (available from Draiswerke, Inc.), half filled with ZrO₂ beads (0.6-1 mm in diameter) is used at a rotor speed of 2000 rpm. Milling is carried out for 6 hours. The resulting dispersion has a greater tendency to reagglomerate, becoming more viscous with a peak appearing at a size of 10 to 100 µm.

### EXAMPLE 4

An anti-corrosive pigment is prepared in-situ by reacting together silica gel, having a particle size of 3-4 µm (available from W. R. Grace & Co.-Conn.), Ca(OH)₂, and 2-hydroxyphosphonoacetic acid. The resultant mixture is then subjected to pearl milling for 30 minutes in a laboratory Dispermat^{®} mill (available from DISPERMAT) using 1 mm glass beads at a rotor speed of 1800 rpm. This results in a free flowing dispersion of Ca/SiO₂[HPA particles having an average particle size of 2 µm. The composition of the slurry in % by weight is silica gel 5.60%; water 81.12%; 5.52% Ca(OH)₂ and 7.76% of a 50% aqueous solution of 2-hydroxyphosphonoacetic acid. After adding the Ca(OH)₂ to the suspension of silica in water, the mixture is aged for 16 hours at 40°C prior to adding the solution of 2-hydroxyphosphonoacetic acid at a rate such that the pH does not drop below 9. The reaction mixture is aged at 90°C for 1 hour prior to cooling and milling. The particles in the milled dispersion do not reagglomerate after sitting for over 90 days, and the dispersion may be added to a variety of protective coating formulations.

### EXAMPLE 5

Anti-corrosive tests are carried out on Example 1 and compared to the Shieldex^{®} C303 pigment alone, since the dispersions of Examples 2 and 3 are not stable. In the absence of being able to apply coatings down to a thickness of a µm (micron) or so, tests are carried out in a water-borne acrylic coating applied by applicator bar to Sendzimir^{®} galvanized steel (i.e., Chemetall Test Panels) so as to obtain a dry film thickness of 40 µm in order to assess whether the dispersion offers any improvements in anti-corrosive performance compared to Shieldex^{®} C303 pigment alone. The formulations employed are given below in Table 3, in which the dispersion is incorporated by simple stirring, whereas Shieldex^{®} C303 pigment is incorporated with the aid of glass beads in the normal way.

After 7 days of drying at room temperature, the coated panels are scribed and subjected to salt spray (using ASTM B 117) for 240 hours, after which the panels are briefly rinsed, dried and evaluated within 30 minutes of withdrawal from the salt spray cabinet. The results are given in Table 1, where ratings are given on a scale of 0 to 5 in which 0 signifies no breakdown and 5 signifies complete breakdown.

**Table 1:**

| Salt spray results for Example 1 against Shieldex^{®} C303 pigment in a water-borne acrylic coating on galvanized steel (Ratings are from 0 to 5 with 0 being best) | | | | |
|---|---|---|---|---|
| | Blistering | Scribe Adhesion Loss | Crosshatch Adhesion Loss | Rusting |
| Shieldex^{®} C303 pigment | 0 | 3 | 5 | 2 |
| Example 1 | 0 | 1 | 2 | 0 |

The results in Table 1 show that improvements in anti-corrosive performance are found for the dispersion of the present invention compared to a commercial product coupled with simpler incorporation.

### EXAMPLE 6

Anti-corrosive tests are also carried out on Example 4. In this case, a zinc-free dispersion of the present invention is compared against a commercially available zinc based anti-corrosive pigment (Heucophos^{®} ZPO anticorrosive pigments available from Heubach GmbH) commonly used in water-borne acrylic coatings. Shfeldex^{®} AC5, a commercially available zinc-free anti-corrosive pigment is also included in the testing as a reference. Coatings are applied by applicator bar to cold rolled steel (Q-Panels S412 available from the Q-Panel Co.) so as to obtain a dry film thickness of 40 µm. The formulations employed are given below in Table 3, where again the dispersion is incorporated by simple stirring, but Heucophos^{®} ZPO pigment is incorporated with the aid of glass beads as referenced herein.

As in Example 5, the coated panels are scribed and subjected to salt spray (using test ASTM B117) for 240 hours, after 7 days of drying at room temperature. Subsequently, the panels are briefly rinsed, dried and evaluated within 30 minutes of withdrawal from the salt spray cabinet. The results are given in Table 2, where again ratings are given on a scale of 0 to 5 in which 0 signifies no breakdown and 5 signifies complete breakdown.

**Table 2:**

| Salt spray results for Example 4 on cold rolled steel against a standard zinc-based anti-corrosive pigment and a standard zinc-free pigment in a water-borne acrylic coating (Ratings are from 0 to 5 with 0 being best) | | | | |
|---|---|---|---|---|
| | Blistering | Scribe Adhesion Loss | Crosshatch Adhesion Loss | Rusting |
| Heucophos^{®} ZPO pigment | 0 | 1 | 0 | 1 |
| Shieldex^{®} AC5 pigment | 3 | 3 | 5 | 4 |
| Example 4 | 0 | 1 | 0 | 1 |

The results in Table 2 demonstrate that a zinc-free dispersion according to the present invention provides superior anticorrosion properties over commercially available heavy metal and zinc-free coatings.

**Table 3:**

| Water-Borne Acrylic Formulations to assess Example 1 on galvanized steel against Shieldex^{®} C303 anticorrosive pigment and Example 4 on cold rolled steel against a standard zinc-based anti-corrosive pigment and a standard zinc-free pigment. | | | | | |
|---|---|---|---|---|---|
| | 1 | 2 | 3 | 4 | 5 |
| 1).Neocryl XK-85 | 11.20 | 11.20 | 9.84 | 11.20 | 9.90 |
| 2). Water | 5.23 | 5.23 | 0.88 | 5.23 | 0.88 |
| 3).Drew 210-693 | 0.14 | 0.14 | 0.12 | 0.14 | 0.12 |
| 4).Disperse-Ayd W33 | 1.43 | 1.43 | 1.26 | 1.43 | 1.26 |
| | | | | | |
| 5).Acrysol TT935 | 0.29 | 0.29 | 0.25 | 0.29 | 0.26 |
| 6).Water | 0.30 | 0.30 | 0.26 | 0.30 | 0.27 |
| | | | | | |
| 7).Ser-AD FA179 | 0.48 | 0.48 | 0.42 | 0.48 | 0.42 |
| 8).Butyl Glycol | 2.15 | 2.15 | 1.89 | 2.15 | 1.90 |
| 9).Neocryl BT-24 | 2.74 | 2.74 | 2.41 | 2.64 | 2.42 |
| 10).Aerosil R972 | 0.57 | 0.57 | 0.52 | 0.57 | 0.52 |
| 11a).Shieldex C303 | 3.39 | - | - | - | - |
| 116). Shieldex AC5 | | 3.39 | | | |
| 11c).Example 1 * | - | - | 19.87 | - | - |
| 11d). Heucophos ZPO | - | - | - | 6.72 | - |
| 11e).Example 4 * | - | - | - | - | 17.68 |
| 12). TiO₂ Kronos 2190 | 4.31 | 4.31 | 3.79 | 4.15 | 3.81 |
| 13). Talc 20MOOS | 10.18 | 10.18 | 8.94 | 9.81 | 10.69 |
| 14).Hostatint Black GR-30 | 0.81 | 0.81 | 0.71 | 0.78 | 0.72 |
| 15).Neocryl XK-85 | 44.66 | 44.66 | 39.24 | 42.64 | 39.48 |
| 16). Texanol | 1.11 | 1.11 | 0.98 | 1.08 | 0.98 |
| 17).Nacore 1652 | 1.91 | 1.91 | 1.68 | 1.91 | 1.69 |
| | | | | | |
| 18).Resydrol AX 237W | 5.06 | 5.06 | 4.45 | 4.88 | 4.47 |
| 19).Butyl Glycol | 2.42 | 2.42 | 2.13 | 2.25 | 2.14 |
| 20).Octa Soligen Co-10% | 0.06 | 0.06 | 0.05 | 0.05 | 0.05 |
| 21). Ammonia 25% | 0.36 | 0.36 | 0.32 | 0.34 | 0.32 |
| 22). Water | 1.20 | 1.20 | - | 0.96 | - |
| | 100.00 | 100.00 | 100.00 | 100.00 | 100.00 |

The dispersions had a concentration of 15% by weight.

### EXAMPLE 7

Calcium hydroxide (3.1g) and 1,2,3-benzotriazole (BTA) (26.9g) in a 1:5 molar ratio are added under stirring to water (70g) so as to achieve a solution having a solid content of 30% by weight. To 100g of LUDOX^{®} AM silica (an aluminate modified colloidal silica obtainable from W. R. Grace & Co.-Conn., having a solid content of 34% by weight), 20g of the BTA containing solution is added slowly under stirring to produce a fine particle dispersion having a calcium content of 0.25 mmoles/g silica and a BTA content of 0.15g/g silica, expressed alternatively as 6.3% by weight of BTA based on the total water content of the dispersion. The pH of the dispersion is 8.5. Adding calcium hydroxide without BTA led to immediate gelation.

### EXAMPLE 8

The anti-corrosive properties of example 7 are determined as follows. To 100g of the dispersion of example 7, 0.39g of sodium chloride is added under stirring so that after dissolution, the concentration of sodium chloride based on the total water content of the dispersion is 0.1M. Aluminium alloy 2024-T3 was used as the test electrode in a three electrode configuration employing a saturated Ag/AgCl reference electrode and a platinum counter electrode in which the sodium chloride containing dispersion is used as the electrolyte. Four hours after the test electrode came into contact with the electrolyte, a current-voltage curve is generated by sweeping 250mV either side of the rest potential under potentiodynamic conditions using Gill8AC electrochemical corrosion test equipment (available from ACM Instruments). The slope of the curve 10mV either side of the rest potential is used as a measure of corrosion inhibition in which the slope has units of resistance. Three comparisons are employed. The first involved adding 0.39g of NaCl under stirring to 100g of LUDOX® AM silica to produce a dispersion 0.1M in NaCl without calcium or BTA. The second involved preparing a solution of calcium hydroxide (0.767g) and BTA (6.684g) in a 1:5 molar ratio in 0.1M NaCl (100g) so that the resulting concentration of BTA is 6.3% by weight of BTA based on the total water content of the solution. The third is simply a 0.1M sodium chloride solution. The results are shown in Table 4.

**Table 4**

| Slope of the current-voltage curve 10mV either side of the rest potential on 2024-T3 aluminum alloy after 4 hours of contact with inhibited electrolytes, 0.1M in sodium chloride. | | |
|---|---|---|
| Inhibitor | Slope (ohms.cm²) | Appearance of current-voltage curve |
| Example 7 | ∼10⁶ | Smooth |
| LUDOX^{®} AM silica | ∼10⁷ | Jagged |
| Ca/BTA | ∼10³ | Smooth |
| BLANK | Immeasurable | Unstable |

As can be seen, both Example 7 and LUDOX^{®} AM silica provide evidence of corrosion inhibition on 2034-T3 compared to BTA alone and the blank, but only Example 7 provides stable inhibition as evidenced by a high slope and a smooth curve, where a jagged curve is indicative of alternating surface breakdown and repair.

While the invention has been described with a limited number of embodiments, these specific embodiments are not intended to limit the scope of the invention as otherwise described and claimed herein. It may be evident to those of ordinary skill in the art upon review of the exemplary embodiments and description herein that further modifications and variations are possible. All parts and percentages in the examples, as well as in the remainder of the specification, are by weight unless otherwise specified. Further, any range of numbers recited in the specification or claims, such as that representing a particular set of properties, units of measure, conditions, physical states or percentages, is intended to literally incorporate expressly herein by reference or otherwise, any number falling within such range, including any subset of numbers within any range so recited. For example, whenever a numerical range with a lower limit, R_{L}, and an upper limit R_{U}, is disclosed, any number R falling within the range is specifically disclosed. In particular, the following numbers R within the range are specifically disclosed: R = R_{L} + k(R_{U} - R_{L}), where k is a variable ranging from 1% to 100% with a 1% increment, e.g., k is 1%, 2%, 3%, 4%, 5%. ... 50%, 51%, 52%. ... 95%, 96%, 97%, 98%, 99%, or 100%. Moreover, any numerical range represented by any two values of R, as calculated above is also specifically disclosed.

## Claims

1. A dispersion of surface modified silica particles comprising:
(a) fluid, wherein said fluid comprises a complexing agent comprising acidic or basic materials, and
(b) the surface modified silica particles comprising polyvalent metal ions and having an average particle diameter of 10 µm (microns) or less.

2. A dispersion according to claim 1, wherein said fluid comprises water, binder, film former, bacteriacide or polymer.

3. A dispersion according to claim 1 or 2, wherein said complexing agent comprises phosphorus acid, phosphoric acid, tri- and polyphosphoric acids, organophosphonic acids or mixtures thereof.

4. A coating comprising the dispersion according to claim 1.

5. A method of making a dispersion of surface modified silica particles comprising:
(a) mixing surface modified silica particles with a fluid comprising a complexing agent comprising acidic or basic materials; and
(b) milling said silica particles, wherein said silica particles are surface modified by polyvalent metal ions and have an average particle diameter of 10 µm (microns) or less.

6. A method according to claim 5, wherein said fluid comprises water, binder, film former, bacteriacide or polymer.

7. A method according to claim 5 or 6, wherein said complexing agent comprises phosphorus acid, phosphoric acid, tri- and polyphosphoric acids, organophosphonic acids or mixtures thereof.

## Patentansprüche

1. Dispersion von oberflächenmodifizierten Siliciumdioxid-Teilchen, die umfasst:
(a) Fluid, wobei das Fluid Komplexierungsmittel umfasst, das saure oder basische Materialien umfasst, und
(b) die oberflächenmodifizierten Siliciumdioxid-Teilchen, die mehrwertige Metallionen umfassen und einen durchschnittlichen Teilchendurchmesser von 10 µm (Mikron) oder weniger aufweisen.

2. Dispersion nach Anspruch 1, bei der das Fluid Wasser, Bindemittel, Filmbildner, Bakterizide oder Polymer umfasst.

3. Dispersion nach Anspruch 1 oder 2, bei der das Komplexierungsmittel phosphorige Säure, Phosphorsäure, Tri- und Polyphosphorsäuren, Organophosphonsäuren oder Mischungen derselben umfasst.

4. Beschichtung, die die Dispersion gemäß Anspruch 1 umfasst.

5. Verfahren zur Herstellung einer Dispersion von oberflächenmodifizierten Siliciumdioxid-Teilchen, das umfasst:
(a) Mischen von aberflächerimadifizierten Siliciumdioxid-Teilchen mit einem Fluid, das Komplexierungsmittel umfasst, das saure oder basische Materialien umfasst, und
(b) Mahlen der Siliciumdioxid-Teilchen, wobei die Siliciumdioxid-Teilchen durch mehrwertige Metallionen oberflächenmodifiziert sind und einen durchschnittlichen Teilchendurchmesser von 10 µm (Mikron) oder weniger aufweisen.

6. Verfahren nach Anspruch 5, bei dem das Fluid Wasser, Bindemittel, Filmbildner, Bakterizide oder Polymer umfasst.

7. Verfahren nach Anspruch 5 oder 6, bei dem das Komplexierungsmittel phosphorige Säure, Phosphorsäure, Tri- und Polyphosphorsäuren, Organophosphonsäuren oder Mischungen derselben umfasst.

## Revendications

1. Dispersion de particules de silice à surface modifiée comprenant :
(a) un fluide, ledit fluide comprenant un agent complexant comprenant des matériaux acides ou basiques, et
(b) les particules de silice à surface modifiée contenant des ions de métal polyvalent et ayant un diamètre moyen de particule inférieur ou égal à 10 µm.

2. Dispersion selon la revendication 1, dans laquelle ledit fluide contient de l'eau, un liant, un agent filmogène, bactéricide ou polymère.

3. Dispersion selon la revendication 1 ou 2, dans laquelle ledit agent complexant contient de l'acide phosphoreux, de l'acide phosphorique, des acides tri- et polyphosphoriques, des acides organophosphoniques ou leurs mélanges.

4. Revêtement, contenant la dispersion selon la revendication 1.

5. Procédé de fabrication d'une dispersion de particules de silice à surface modifiée comprenant :
(a) le mélange de particules de silice à surface modifiée avec un fluide contenant un agent complexant comprenant des matériaux acides ou basiques ; et
(b) le broyage desdites particules de silice, lesdites particules de silice ayant une surface modifiée par des ions de métal polyvalent et ayant un diamètre moyen de particule inférieur ou égal à 10 µm.

6. Procédé selon la revendication 5, dans lequel ledit fluide contient de l'eau, un liant, un agent filmogène, bactéricide ou polymère.

7. Procédé selon la revendication 5 ou 6, dans lequel ledit agent complexant contient de l'acide phosphoreux, de l'acide phosphorique, des acides tri- et polyphosphoriques, des acides organophosphoniques ou leurs mélanges.
